# EUROPÄISCHE PATENTSCHRIFT

(11) **EP 1 095 904 B1**
(45) Veröffentlichungstag und Bekanntmachung des Hinweises auf die Patenterteilung: **13.07.2005**
(21) Anmeldenummer: 00119233.5
(22) Anmeldetag: 06.09.2000
(51) Int. Cl.: C01B 3/38, B01J 8/02

(54) **Verfahren zur katalytischen Brennstoffumsetzung mit Wasser und Sauerstoff**
Process for the catalytic conversion of fuel with water and oxygen
Procede pour la conversion catalytique de carburant avec de l'eau et de l'oxygène

(30) Priorität: 27.10.1999 DE 19951585
(43) Veröffentlichungstag der Anmeldung: 02.05.2001
(73) Patentinhaber: DaimlerChrysler AG, 70567 Stuttgart (DE)
(72) Erfinder: Docter, Andreas, Dr., 89077 Ulm (DE); Loschko, Birgit, 73269 Hochdorf (DE); Wiesheu, Norbert, 89312 Günzburg (DE)

(56) Entgegenhaltungen:
- WO-A-98/49096
- DE-C- 908 513
- US-A- 4 115 074
- US-A- 5 937 632

## Beschreibung

Die Erfindung bezieht sich auf ein Verfahren zur katalytischen Umsetzung eines Kohlenwasserstoff- oder Kohlenwasserstoffderivat-Brennstoffs mit zugeführtem Wasser und mit Sauerstoff in einen katalysatorbelegten Reaktionsraum, welchem ein Eduktgemisch mit dem Brennstoff als einem ersten Edukt, dem Wasser als einem zweiten Edukt und einem sauerstoffhaltigen Gas als einem dritten Edukt zugeführt wird.

In derartigen Verfahren werden als Edukte der Brennstoff, das Wasser und ein sauerstoffhaltiges Gas, z.B. Luft, durch entsprechende Eduktzufuhrmittel einem Reaktionsraum zugeführt, der mit einem geeigneten Katalysatormaterial belegt ist. Unter der Wirkung des Katalysatormaterials wird der eingesetzte Brennstoff mit dem Wasser und dem Sauerstoff umgesetzt. Die Umsetzungsreaktion beinhaltet im allgemeinen einerseits eine endotherme Reformierungsreaktion des Brennstoffs mit dem Wasser und andererseits eine exotherme Oxidationsreaktion des Brennstoffs mit dem Sauerstoff. Durch entsprechende Prozessführung kann die Umsetzungsreaktion autotherm eingestellt werden, d.h. die exotherme Reaktion des Brennstoffs mit dem Sauerstoff liefert gerade die für die endotherme Reformierung des Brennstoffs mit Wasser erforderliche Wärme, so dass weder eine Kühlung, noch eine Beheizung des Reaktionsraums nötig ist. Ziel dieser Art von Umsetzungsreaktionen ist die Gewinnung eines wasserstoffreichen Gases aus dem Brennstoff, z.B. Benzin oder Methanol, um den dadurch erzeugten Wasserstoff z.B. zur Speisung von Brennstoffzellen eines Brennstoffzellenfahrzeugs oder eines stationären Brennstoffzellensystems zu verwenden.

Für die Katalysatorbelegung des Reaktionsraums gibt es verschiedene Möglichkeiten. So kann das Katalysatormaterial als Pelletschüttung oder als Wandbeschichtung vorliegen. Eine weitere Möglichkeit ist das Anbringen des Katalysatormaterials auf einem Katalysatorträger hoher Oberfläche. Zu diesem Zweck kommen als Katalysatorträger verschiedene Strukturen in Betracht, wie Monolithstrukturen aus Metall oder Keramik, Keramikschäume, Drahtgitterscheiben oder Kreuzkanalstrukturen, die als statische Mischer wirken. Für eine effektive Umsetzung des Brennstoffs ist eine möglichst homogene Verteilung der drei Edukte im katalysatorbelegten Reaktionsraum anzustreben. Im Reaktionsraum selbst ist eine homogene Eduktgemischaufbereitung oftmals kaum mehr erreichbar, insbesondere bei monolithischen Katalysatorträgerstrukturen, bei denen im Katalysatorträgerbereich kein Produktgasaustausch möglich ist. Je nach Art des Katalysatorträgers wird daher vielfach vorgesehen, die Edukte vor Eintritt in den Reaktionsraum vor zu verdampfen, insbesondere das Wasser und den üblicherweise ebenfalls flüssigen Brennstoff, vorzumischen und als entsprechendes Gas-/Dampfgemisch in den Reaktionsraum einzuleiten.

In der Patentschrift US 4,024,912 ist eine mehrstufige Reaktoranlage beschrieben, bei der in einer ersten Stufe ein Kohlenwasserstoffmaterial in Form eines Öls mit Hilfe von überhitztem Wasserdampf zerstäubt und in einer Brennkammer mit zu-geführtem Sauerstoff nicht-katalytisch verbrannt wird, wobei das dadurch entstehende, Kohlenmonoxid und Wasserstoff enthaltende Produktgas in eine nachgeschaltete, katalysatorbelegte Reformerkammer zur Durchführung einer Wassergasreaktion unter Zufuhr von Wasser oder Dampf eingeleitet wird. In der Reformerkammer entstehende Wärme dient zur Aufheizung des Wassers für die Zerstäubung des Kohlenwasserstoffmaterials.

Aus der Offenlegungsschrift DE 26 57 385 A1 ist eine Reaktoranlage zur katalytischen Partialoxidation von schweres Restöl enthaltenen Kohlenwasserstoffen bekannt, die einen katalysatorbelegten Reaktionsraum und diesem vorgeschaltet eine Atomisierungszone mit spezieller Zylinder- oder Kegelstumpfform beinhaltet. Um ein wasserstoffhaltiges Gasgemisch durch Vergasung zu erzeugen, wird der Kohlenwasserstoff mit einem Gemisch aus einem sauerstoffhaltigen Gas und Dampf in der Atomisierungszone unter Bildung einer im wesentlichen wirbelstromfreien Strahlströmung atomisiert.

In der Offenlegungsschrift DE 29 02 845 A1 ist eine Reaktoranlage zur Herstellung von Gasen aus Schwerölen beschrieben, wozu das Schweröl zerstäubt und zusammen mit Wasserdampf durch eine Hochtemperaturzone in Form eines Wärmecrackungsrohrs hindurchgeleitet wird, um anschließend durch eine Katalysatorschicht aus Erdalkalimetalloxiden hindurchgeführt zu werden. Sowohl das Schweröl als auch der Wasserdampf werden vor der Zerstäubung bevorzugt vorerhitzt, wobei der vorerhitzte Wasserdampf zusammen mit einer Gasmischung zugeführt werden kann, die Sauerstoff, Wasserstoff und Kohlendioxid enthält.

In der Offenlegungsschrift DE 30 47 734 A1 ist eine Brennereinheit zum Vermischen einzelner Einsatzströme unter Bildung eines Mehrphasengemisches und zur Umsetzung desselben in einem Partialoxidations-Gaserzeuger beschrieben. Die Brennereinheit ist als Einfach- oder Mehrfachringbrennereinheit ausgelegt und dient speziell dazu, pumpfähige Aufschlämmungen von kohlen-stoffhaltigen Festbrennstoffen in einer Trägerflüssigkeit, wie Wasser und/oder flüssige oder gasförmige Kohlenwasserstoffe durch Partialoxidation umzusetzen. Dazu werden der Brennereinheit z.B. ein sauerstoffhaltiges Gas, ein kohlenstoffhaltiger Festbrennstoff und Wasser sowie gegebenenfalls Dampf, ein flüssiges kohlenwasserstoffhaltiges Material und/oder ein Temperaturmoderatorgas in bestimmten Kombinationen über eine Mittenleitung einerseits sowie einen oder mehrere Ringkanäle und/oder Rohrbündel andererseits zugeführt. Am austrittsseitigen Ende der Brennereinheit kann eine Vormischzone zum Vermischen wenigstens zweier Reaktionsmittelströme vorgesehen sein.

Ferner ist aus der US 4,115,074 A ein Reaktoranlage mit einem katalysatorbelegten Reaktionsraum und Mitteln zur Zufuhr von flüssigem Brennstoff, sauerstoffhaltigem Gas und Wasserdampf. Problematisch ist dabei, dass das Wasser, insbesondere in der Kaltstartphase der Anlage, mit extern zugeführter Energie verdampft werden muss, ehe es genutzt werden kann.

Der Erfindung liegt als technisches Problem die Bereitstellung ein Verfahren der eingangs genannten Art zugrunde, bei der mit relativ geringem Aufwand sichergestellt ist, dass die drei Edukte in ausreichend gut vermischter Form in den katalysatorbelegten Reaktionsraum gelangen.

Die Erfindung löst dieses Problem durch die Bereitstellung eines Verfahrens mit den Merkmalen des Anspruchs 1. Das Verfahren nutzt als Teil der Eduktzufuhrmittel einen Eduktgemischaufbereitungsraum, der mit seiner Austrittsseite an die Eintrittsseite des katalysatorbelegten Reaktionsraums angrenzt. Die Eduktzufuhrmittel beinhalten des weiteren Brennstoffeinspritzmittel, mit denen der Brennstoff in flüssiger Form in den Eduktgemischaufbereitungsraum unter Tröpfchenbildung eingespritzt wird, sowie Gaszufuhrmittel, die so ausgelegt sind, dass sie das sauerstoffhaltige Gas unter Verwirbelung der Brennstofftröpfchen in den Eduktgemischaufbereitungsraum einspeisen, und Wasserzufuhrmittel, durch die das Wasser in den Eduktgemischaufbereitungsraum gelangt.

Gemäß des Verfahrens nach Anspruch 1 werden die Wasserzufuhrmittel in Abhängigkeit davon unterschiedlich betrieben werden, ob sich die Reaktoranlage in einer Kaltstartphase oder im betriebswarmen Zustand befindet. In ersterem Fall dosieren sie das Wasser in zerstäubter Form zu, während sie in letzterem Fall das Wasser in verdampfter Form zudosieren. Die zum Verdampfen des flüssig bereitstehenden Wassers erforderliche Wärme wird hierbei durch Systemwärmerückkopplung geliefert. Eine vorherige Verdampfung des Wassers ist dadurch wenigstens während Kaltstartphasen nicht erforderlich.

Bei dem Verfahren nach Anspruch 2 beinhalten die Eduktzufuhrmittel mehrere Zufuhrdüsen, die an der Eintrittsseite des Eduktgasaufbereitungsraums verteilt angeordnet sind und von denen jede eines oder mehrere der drei Edukte in dem Eduktgasaufbereitungsraum zudosiert. Insbesondere kann eine flächig verteilte Anordnung einer Vielzahl von Einstoff-Zufuhrdüsen vorgesehen sein, über die jeweils nur eines der drei Edukte in den Eduktgasaufbereitungsraum eingespeist wird. Vorzugsweise sind dabei für jedes der drei Edukte mehrere Zufuhrdüsen vorgesehen, die ihrerseits möglichst gleichmäßig verteilt an der Eintrittseite des Eduktgasaufbereitungsraums angeordnet sind, so dass insgesamt die Zufuhrdüsen für die verschiedenen Edukte möglichst homogen über die Eintrittseite des Eduktgasaufbereitungsraums hinweg verteilt sind. Dadurch wird gewährleistet, dass sich die einzeln in den Eduktgasaufbereitungsraum eingebrachten Edukte dort schon in der Nähe der Eintrittseite und jedenfalls bis zum Erreichen von dessen Austrittseite sehr homogen Durchmischen.

Die so gemäß dem Verfahren nach Anspruch 1 bzw. 2 eingesetzten Eduktzufuhrmittel gewährleisten eine ausreichend gute Durchmischung der drei Edukte, d.h. ein ausreichend homogenes Eduktgemisch, schon in dem Eduktgemischaufbereitungsraum, der dem Reaktionsraum vorgeschaltet ist, so dass das Eduktgemisch mit guter, ausreichen-der Homogenität der Durchmischung der drei Edukte in den Reaktionsraum gelangt.

Selbst bei Verwendung von hinsichtlich der Gemischaufbereitung kritischen Katalysatorträgerstrukturen läßt sich somit durch die speziellen Eduktzufuhrmittel in dem erfindungsgemäßen Verfahren der eingesetzte Brennstoff in ausreichend gut mit dem Wasser und dem sauerstoffhaltigen Gas vermischter Form in den Reaktionsraum einbringen und dort z.B. autotherm in ein wasserstoffreiches Gas umsetzen. Das erfindungsgemäße Verfahren läßt sich dabei ohne weiteres so auslegen, dass sie auch die speziellen Bedingungen für einen mobilen Einsatz, z.B. in Brennstoffzellenfahrzeugen, erfüllt, wie ausreichende Dynamik und Temperaturbeständigkeit, ausreichendes Lastspreizungsvermögen, komplette Verdampfung des Brennstoffs und eine von der Einbaulage unabhängige Betriebsfähigkeit, wobei letzteres besonders beim Einbau in Kraftfahrzeugen von Bedeutung ist.

In einer Weiterbildung der Erfindung nach Anspruch 3 beinhalten die Gaszufuhrmittel spezielle Drallströmungserzeugungsmittel. Die von diesen bewirkte Drallströmung des eingespeisten sauer-stoffhaltigen Gases fördert eine gute Verwirbelung der eingespritzten Brennstofftröpfchen im Eduktgemischaufbereitungsraum.

In einer Weiterbildung der Erfindung nach Anspruch 4 beinhalten die Gaszufuhrmittel speziell Vorerwärmungsmittel, um das sauerstoffhaltige Gas durch Verdichtung und/oder Systemwärmerückkopplung vor oder spätestens im Eduktgemischaufbereitungsraum und damit vor Eintritt in den Reaktionsraum zu erwärmen. Unter Systemwärmerückkopplung ist dabei die Nutzung von Wärme zur Aufheizung des sauerstoffhaltigen Gases zu verstehen, die aus dem System selbst gewonnen wird, z.B. unter Abkühlung des aus dem Reaktionsraum austretenden Produktgases oder einer dem Reaktionsraum nachgeschalteten Systemkomponente, wie einer nachgeschalteten Gasreinigungsstufe zur exothermen Umsetzung und damit Beseitigung von im Produktgas enthaltenem Kohlenmonoxid.

In einer Weiterbildung der Erfindung nach Anspruch 5 sind die Wasserzufuhrmittel so ausgelegt, dass sie das zerstäubte oder verdampfte Wasser dem sauerstoffhaltigen Gasstrom zudosieren, bevor es mit diesem zusammen in den Eduktgemischaufbereitungsraum eingespeist wird, so dass ein gemeinsamer Zufuhrkanal zum Einbringen des Wassers und des sauerstoffhaltigen Gasstroms in den Eduktgemischaufbereitungsraum genügt.

In einer Weiterbildung der Erfindung nach Anspruch 6 umfaßt der Eduktgemischaufbereitungsraum einen Hauptraum und eine vorgeschaltete Vormischkammer. Die drei Edukte werden in die Vormischkammer eingebracht und dort vorgemischt. Von der Vormischkammer gelangen sie dann in den Hauptraum, z.B. unter Drallerzeugung. Durch entsprechende Auslegung von Vormischkammer und Hauptraum läßt sich eine sehr intensive Eduktvermischung erreichen, z.B. aufgrund des durch das Vorschalten der Vormischkammer verlängerten Gemischströmungsweges und/oder durch eine Erhöhung der Gemischströmungsgeschwindigkeit, wie sie durch geeignete Gestaltung der Ausströmgeometrie der Vormischkammer, insbesondere einer Querschnittsverjüngung derselben, erzielbar ist.

In einer Weiterbildung der Erfindung nach Anspruch 7 beinhalten die Eduktzufuhrmittel eine einzelne, vorzugsweise an einer zentralen Stelle der Eintrittseite des Eduktgemischaufbereitungsraums angeordnete Mehrstoffdüse, über die alle drei Edukte in den Eduktgemischaufbereitungsraum eingespeist werden. Je nach Auslegung der Mehrstoffdüse als Zweistoff- oder Dreistoff-Düse werden die drei Edukte dieser Düse getrennt zugeführt, oder es werden zwei Edukte in vorgemischter Form über einen ersten Eintrittskanal und das dritte Edukt über einen zweiten Eintrittskanal der Mehrstoffdüse zugeführt.

Vorteilhafte Ausführungsformen der Erfindung sind in den Zeichnungen dargestellt und werden nachfolgend beschrieben. Hierbei zeigen:
- Fig. 1: eine schematische Prinzipskizze einer Reaktoranlage mit zentraler Eduktzuführung in einen Eduktgemischaufbereitungsraum,
- Fig. 2: eine Längsschnittansicht einer gemäß der Prinzipskizze von Fig. 1 realisierten Reaktoranlage,
- Fig. 3: eine Draufsicht auf den Eduktgemischaufbereitungsraum von Fig. 2 mit mittenversetzter Gasströmungsführung zur Drallerzeugung,
- Fig .4: eine Schnittansicht längs der Linie IV-IV von Fig. 3,
- Fig .5: eine Prinzipskizze entsprechend Fig. 1, jedoch für eine Reaktoranlage mit Vormischkammer und
- Fig. 6: eine Prinzipskizze einer Reaktoranlage mit flächiger Düsenanordnung an der Eintrittseite eines Eduktgemischaufbereitungsraums.

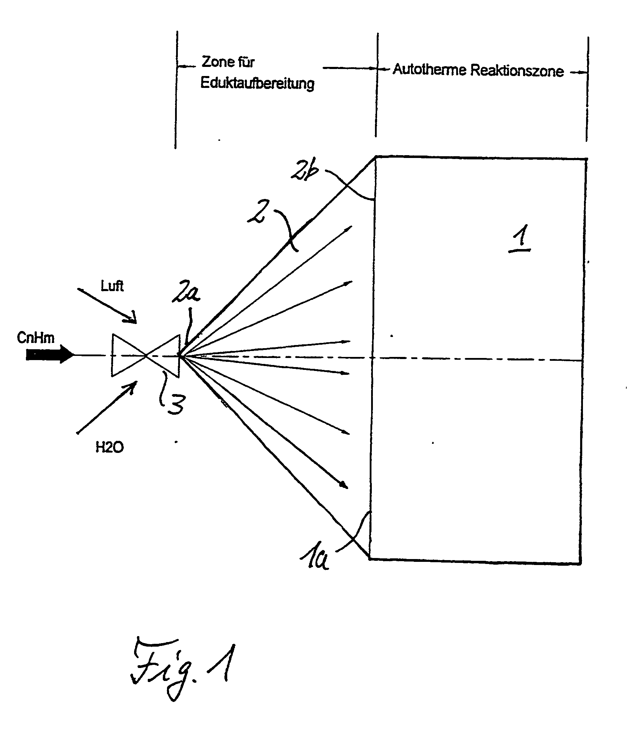

Fig. 1 zeigt schematisch einen hier interessierenden Teil einer Reaktoranlage zur autothermen Umsetzung eines Kohlenwasserstoff-Brennstoffs (in der üblichen allgemeinen Notation CnHm angegeben), z.B. Benzin, mit Wasser und Sauerstoff zwecks Gewinnung eines wasserstoffreichen Produktgases, das im allgemeinen zusätzlich Kohlenmonoxid und gegebenenfalls weitere Nebenprodukte enthält. Die Umsetzungsreaktion erfolgt in einer durch einen Reaktionsraum 1 definierten, vorzugsweise autothermen Reaktionszone und umfaßt üblicherweise zum einen eine endotherme Wasserdampfreformierung und zum anderen eine exotherme partielle Oxidation des Brennstoffs. Durch entsprechende Prozeßführung, insbesondere hinsichtlich Temperatur und Druck im Reaktionsraum 1 und der zugeführten Menge des jeweiligen Eduktes, speziell des Mengenverhältnisses von Wasser und Sauerstoff, läßt sich die Umsetzungsreaktion autotherm einstellen, was den Vorteil hat, daß der Reaktionsraum 1 weder gekühlt, noch beheizt werden muß. In den Reaktionsraum 1 ist in herkömmlicher Weise ein zur Katalysierung der Umsetzungsreaktion geeignetes Katalysatormaterial eingebracht, z.B. in Form eines mit dem Katalysatormaterial versehenen Katalysatorträgers. Mögliche Katalysatorträgerstrukturen sind monolithische Strukturen aus Metall oder Keramik, Keramikschäume, Drahtgitterscheiben, als statische Mischer wirkende Kreuzkanalstrukturen und dergleichen. Zur homogenen Vermischung der in den Reaktionsraum 1 einzubringenden Edukte, d.h. des eingesetzten Brennstoffs CnHm, des Wassers (H₂O) und des Sauerstoffs, sind Eduktzufuhrmittel vorgesehen, die eine direkt an die Eintrittseite 1a des Reaktionsraums 1 angrenzende Eduktaufbereitungszone beinhalten, die durch einen entsprechenden Eduktgemischaufbereitungsraum 2 realisiert ist. An der Eintrittsseite 2a des Eduktgemischaufbereitungsraums 2, der mit seiner Austrittsseite 2b in die Eintrittsseite 1a des Reaktionsraums 1 übergeht, sind geeignete Eduktzudosiermittel angeordnet, die den Brennstoff CnHm, das Wasser und den Sauerstoff, letzteren z.B. in Form von Luft, mit guter Durchmischung in den Gemischaufbereitungsraum 2 einbringen, wobei zur Durchmischung der drei Edukte auch die Geometrie des Gemischaufbereitungsraums 2 beitragen kann. Im Beispiel von Fig. 1 erfolgt die Zudosierung der drei Edukte in den Eduktgemischaufbereitungsraum 2 durch eine einzige, zentrale Mehrstoffdüse 3.

Dabei erfolgt die Zudosierung des Brennstoffs unabhängig von den Betriebsbedingungen der Reaktoranlage stets in flüssiger Form, und zwar derart, daß er eine hohe spezifische Oberfläche erhält. Dazu kann die Zufuhrdüse 3 beispielsweise ein elektromagnetisch betätigbares Einspritzventil beinhalten, wie es typischerweise in Verbrennungsmotoren eingesetzt wird. Dieser Einspritzventilteil der Zufuhrdüse 3 kann, wie ebenfalls von herkömmlichen Verbrennungsmotor-Einspritzanlagen bekannt, entweder über ein Niederdrucksystem mit typischen Drücken bis zu etwa 5bar oder über ein Hochdrucksystem mit typischen Drücken zwischen etwa 20bar und etwa 120bar versorgt werden. Je höher das Druckgefälle über dem Einspritzventil ist, um so feiner läßt sich der Brennstoff zerstäuben und um so größer ist folglich seine spezifische Oberfläche in der zerstäubten, im Gemischaufbereitungsraum 2 vorliegenden Form.

Die Luftzudosierung erfolgt so, daß die durch das Einspritzen des Brennstoffs gebildeten Brennstofftröpfchen maximal verwirbelt werden, um eine möglichst gute Vermischung der Verbrennungsluft mit dem Brennstoff zu erreichen. Dies kann insbesondere durch eine Luftströmungsführung erreicht werden, die einen möglichst großen Drall erzeugt. Des weiteren ist eine Luftvorwärmung günstig, die sich durch Verdichtung der angesaugten Luft und/oder durch Systemwärmerückführung erzielen läßt. Typischerweise wird die Luft hierbei auf ca. 200°C erwärmt. Die Luftverdichtung dient primär dazu, die Luft über die Zufuhrdüse 3 strahlförmig in den Gemischaufbereitungsraum 2 einzubringen und insgesamt das dort aufbereitete Eduktgemisch mit ausreichendem Überdruck in den Reaktionsraum 1 einzuspeisen. Die erwähnte Systemwärmerückfiahrung besteht darin, dem aus dem Reaktionsraum 1 austretenden Produktgas oder einer dem Reaktionsraum 1 nachgeschalteten Systemkomponente, wie einer Gasreinigungsstufe, überschüssige Wärme zu entziehen und diese zu den Eduktzufuhrmitteln zurückzuführen und dort zu nutzen, z.B. für die erwähnte Luftvorerwärmung.

Die Wasserzudosierung zum Gemischaufbereitungsraum 2 erfolgt vorzugsweise in Abhängigkeit davon, ob sich die Reaktoranlage in einer Kaltstartphase oder im betriebswarmen Zustand befindet. Während der Kaltstartphase erfolgt die Wasserzudosierung dadurch, daß flüssiges Wasser fein zerstäubt in den Luftstrom injiziert wird. Die Wasserzerstäubung kann mittels einer herkömmlichen, zu diesem Zweck gebräuchlichen Düse erfolgen, wie einer Vernebelungsdüse oder einem Einspritzventil, die der Zufuhrdüse 3 vorgelagert ist und das zerstäubte Wasser dem Luftstrom vor Eintritt in die Zufuhrdüse 3 beimischt. Diese Beimischung kann auch in einer Zweistoffdüse erfolgen, welcher einerseits der Luftstrom und andererseits das flüssige Wasser zugeführt wird. Als weitere Alternative kommt die Zerstäubung des flüssigen Wassers erst durch die Zufuhrdüse 3 selbst in Betracht, wozu diese dann geeignet ausgelegt ist. Dabei kann das flüssige Wasser bei Bedarf auch dem flüssigen Brennstoff vor Eintritt in die Zufuhrdüse 3 beigemengt und zusammen mit diesem zerstäubt werden.

Im betriebswarmen Zustand der Reaktoranlage steht durch die erwähnte Systemwärmerückkopplung ausreichend Wärme zur Verfügung, so daß auf Wunsch statt der während der Kaltstartphase durchgeführten Zerstäubung eine Verdampfung des flüssig zugeführten Wassers mit rückgekoppelter Systemwärme möglich ist, ohne daß hierfür eine externe Wärmezufuhr zwingend erforderlich ist. Das verdampfte Wasser kann dann separat oder mit dem Luftstrom vorgemischt in den Gemischaufbereitungsraum 2 eingespeist werden. Der Wasserdampf gelangt dann mit einer Temperatur von z.B. ca. 300°C in den Reaktionsraum 1.

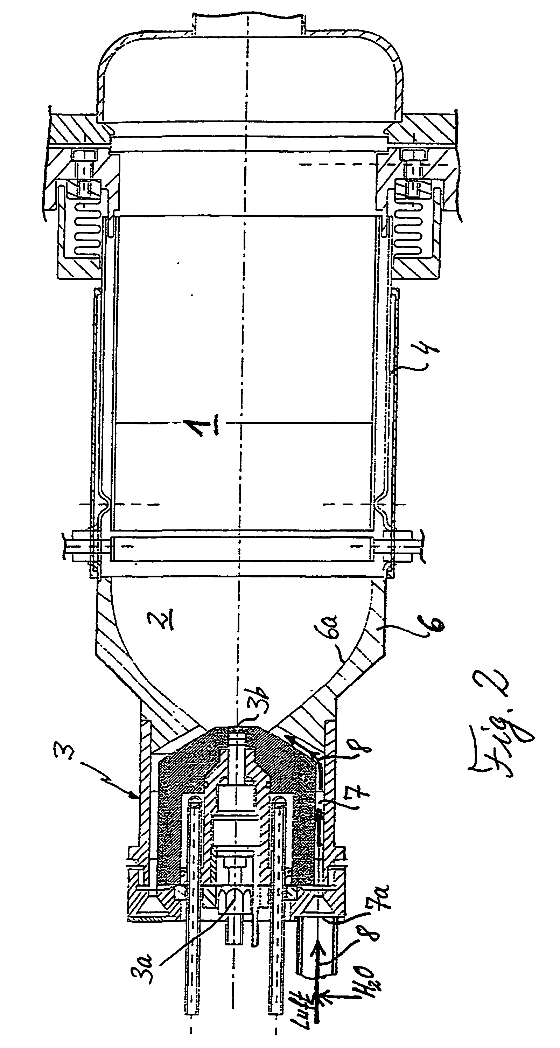

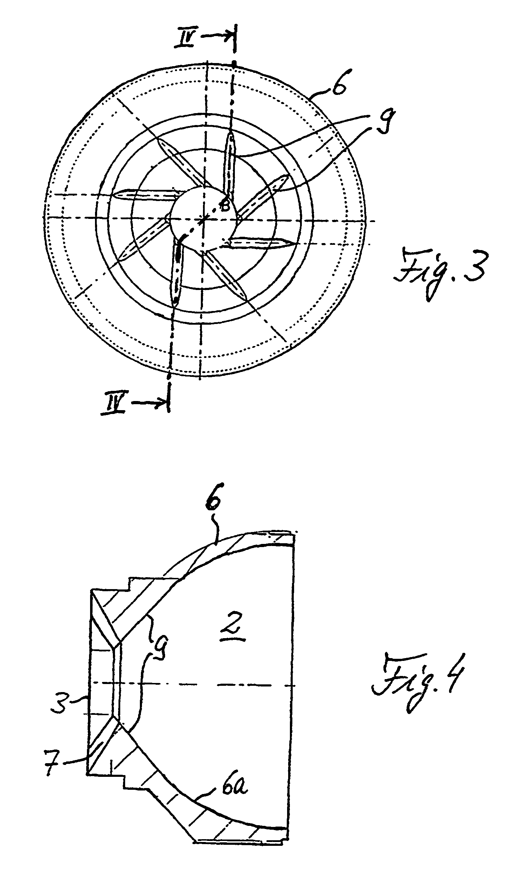

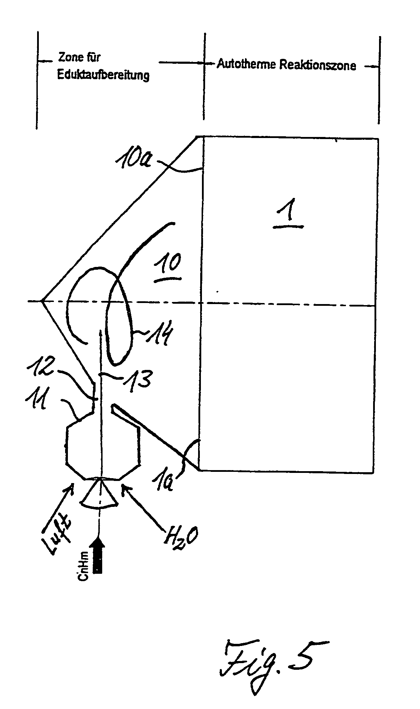

In den Fig. 2 bis 4 ist eine praktische Umsetzung für den in Fig. 1 nur skizzenhaft veranschaulichten Anlagenteil gezeigt. Wie daraus ersichtlich, befindet sich der katalysatorbelegte Reaktionsraum 1 in einem zylindrischen Gehäuse 4, an dessen eintrittseitige Stirnseite ein grob halbkugelförmiger Gehäuseteil 6 angeflanscht ist, dessen Innenfläche 6a eine spezielle, vorgegebene geometrische Formung aufweist, welche die Verwirbelungswirkung der vorgeschalteten Zufuhrdüse unterstützt. Die Zufuhrdüse 3 beinhaltet zum einen ein herkömmliches Einspritzventil 3a, über das der Brennstoff an einer Austrittsdüse 3b in den Eduktgemischaufbereitungsraum 2 mit breitem, kegelförmigem Strahl eingespritzt und dadurch fein zerstäubt wird.

Über einen seitlichen Zuströmkanal 7 der Zufuhrdüse 3 wird ein vorgemischter Luft-/Wasserstrom 8 in den Gemischaufbereitungsraum 2 eingespeist. Dabei wird das Wasser vor dem Zuströmkanaleintritt 7a der Zufuhrdüse 3 in den zugeführten Luftstrom, wie oben erläutert, dampfförmig oder zerstäubt zugegeben. Der Zuströmkanal 7 geht austrittseitig in Drallströmungskanäle 9 über, die in einem anschließenden Teil der Innenseite des den Gemischbildungsraum 2 definierenden Gehäuseteils 6 vorgesehen sind. Wie insbesondere aus Fig. 3 ersichtlich, sind acht derartige Drallströmungskanäle 9 um den Umfang der Eintrittseite des Gemischbildungsraums 2 verteilt mit einem außermittigen Verlauf angeordnet. Die außermittigen Drallströmungskanäle 9 bewirken eine aus der Mitte versetzte Strömungsführung für den zugeführten, das beigemischte dampfförmige bzw. zerstäubte Wasser enthaltenden Luftstrom mit hoher Drallwirkung. Dies bewirkt eine starke Verwirbelung der mit mittigem Einspritzkegel eingedüsten Brennstofftröpfchen durch den Drall-Luftstrom in Eduktgemischaufbereitungsraum 2. Insgesamt wird auf diese Weise eine sehr homogene und fein verteilte Durchmischung der drei Edukte im Gemischaufbereitungsraum 2 erzielt.

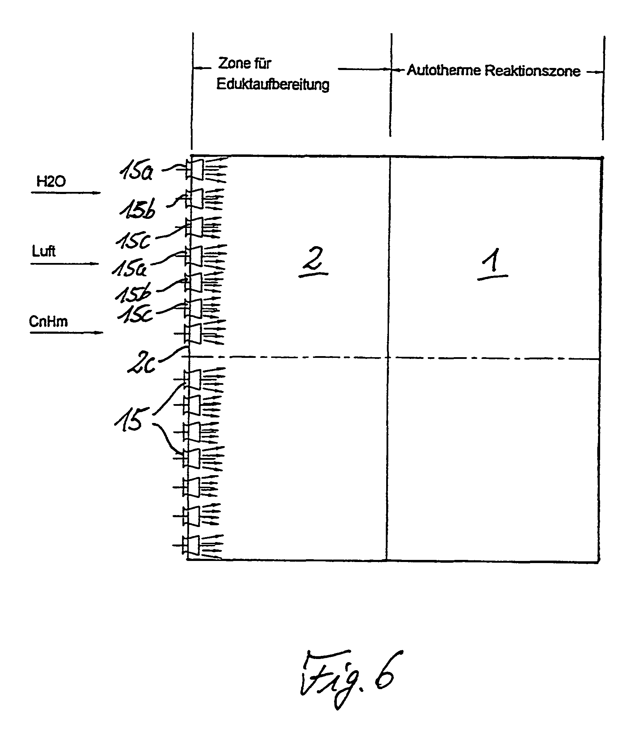

Fig. 5 zeigt ein weiteres Ausführungsbeispiel hinsichtlich der Eduktzufuhrmittel, wobei im übrigen für funktionell gleiche Elemente dieselben Bezugszeichen wie im Ausführungsbeispiel der Fig. 1 bis 4 verwendet sind. In diesem Beispiel besteht der Eduktgemischaufbereitungsraum aus einem Hauptraum 10 und einer diesem vorgeschalteten Vormischkammer 11. Derartige Vormischkammeranordnungen sind beispielsweise von Kraftfahrzeug-Dieselmotoren bekannt. Die Eduktgemischaufbereitung erfolgt primär in der Vormischkammer 11, von der das voraufbereitete Eduktgemisch über einen Verbindungskanal 12 in den Hauptraum 10 eingespeist wird. Der Hauptraum 10 schließt wiederum mit seiner Austrittseite 10a direkt an die Eintrittseite 1a des Reaktionsraums 1 an und ist im übrigen so gestaltet, daß er eine starke Verwirbelung des von der Vormischkammer 11 kommenden, seitlich eintretenden, vorgemischten Eduktstroms 13 bewirkt, wie durch eine Wirbellinie 14 symbolisiert. Zusätzlich trägt zu einer besonders intensiven Vermischung der drei Edukte der durch die vorgeschaltete Vormischkammer 11 verlängerte Strömungsweg für das Eduktgemisch und eine erhöhte Strömungsgeschwindigkeit des Eduktgemisches bei, die mit einer speziellen Ausströmgeometrie der Vormischkammer 11 bewirkt wird und insbesondere eine entsprechende Querschnittsverjüngung beinhaltet.

Während in den oben beschriebenen Ausführungsbeispielen eine zentrale Eduktgemischeinspeisung durch nur eine Zufuhrdüse vorgesehen ist, zeigt Fig. 6 schematisch ein Ausführungsbeispiel mit flächiger Zudosierung, wobei wiederum für funktionell gleiche Elemente dieselben Bezugszeichen gewählt sind wie in den oben beschriebenen Ausführungsbeispielen. Im Beispiel von Fig. 6 weist der Eduktgemischaufbereitungsraum 2, der austrittsseitig wiederum an die Eintrittsseite des Reaktionsraums 1 angrenzt, eine Eintrittsfläche 2c auf, über die hinweg eine Vielzahl von nebeneinanderliegenden Zufuhrdüsen 15 gleichmäßig verteilt als zweidimensionales Düsenfeld angeordnet ist. Die Zufuhrdüsen 15 sind als Einstoff-Düsen ausgebildet, die jeweils das ihr zugeführte Edukt in den Gemischaufbereitungsraum 2 eindüsen. Dazu ist einem ersten Drittel 15a der Zufuhrdüsen 15 das einzuspeisende Wasser, einem zweiten Drittel 15b die einzuspeisende Luft und einem dritten Drittel 15c der einzuspritzende Brennstoff zugeführt. Die Verteilung der Zufuhrdüsen 15 auf die drei Edukte ist möglichst gleichmäßig gewählt, so daß längs einer beliebigen Richtung der Eintrittsfläche 2c die Zufuhrdüsen für Wasser, Luft und Brennstoff zyklisch aufeinanderfolgen bzw. eine Düse, die das eine Edukt führt, nur von Düsen umgeben ist, welche die beiden anderen Edukte führen.

Alternativ zu dieser Verwendung von Einstoff-Düsen können die Zufuhrdüsen 15 auch von Zweistoff- oder Dreistoff-Düsen gebildet sein, wobei selbstverständlich auch die Verwendung sowohl von Einstoff-Düsen als auch von Zweistoff-Düsen vorgesehen sein kann. Soweit Dreistoff-Düsen verwendet werden, werden diesen alle drei Edukte zugeführt und gemeinsam von der betreffenden Dreistoff-Düse in gut vermischter Form in den Gemischaufbereitungsraum 2 injiziert. Gegebenenfalls verwendeten Zweistoff-Düsen werden zwei der drei Edukte zur gemeinsamen Einspeisung in den Gemischaufbereitungsraum 2 zugeführt, während das dritte Edukt allein oder zusammen mit weiteren Anteilen des ersten und/oder des zweiten Eduktes über andere der Zufuhrdüsen 15 eingedüst wird. Es versteht sich, daß im Vergleich zur Verwendung einer zentralen Zufuhrdüse der Massenstrom bei der flächigen Dosieranordnung von Fig. 6 pro Edukt proportional zur Anzahl der von ihm gespeisten Zufuhrdüsen reduziert ist. Als Zufuhrdüsen 15 sind insbesondere Lochblenden, die von hinten segmentiert das jeweilige Edukt durchlassen, oder Mikrodüsen verwendbar, die nicht nur als Einstoffdüsen, sondern auch als Zweistoff- oder Dreistoff-Düsen ausgebildet sein können. Unter der Annahme einer vollständigen Verdampfung bzw. Vermischung der Edukte genügt bei der flächigen Zudosierung im Vergleich zur zentralen Zudosierung über eine einzelne Zufuhrdüse mit konzentrischem Sprühkegel bei gegebener, gewünschter spezifischer Brennstofftropfenoberfläche ein verringertes Volumen des Gemischaufbereitungsraums 2, das nur etwa ein Drittel desjenigen bei zentraler Zudosierung betragen braucht. Durch die flächige Zudosierung wird eine homogen durchmischte Tröpfchenströmung generiert, die sich von der flächigen Eintrittsseite 2c bis zur an den Reaktionsraum 1 angrenzenden Austrittsseite des Eduktgemischaufbereitungsraums 2 ausbildet.

In allen gezeigten und oben beschriebenen Ausführungsbeispielen werden vorzugsweise steuerbare Zufuhrdüsen verwendet, die z.B. proportional angesteuert werden können oder von denen bei Verwendung einer flächigen Zudosierung über mehrere Zufuhrdüsen ein Teil der Düsen abgeschaltet werden kann, um eine gewünschte Lastspreizung zu ermöglichen. Für die Zudosiersteuerung der Zufuhrdüsen kann je nach Anwendungsfall eine kontinuierliche oder diskontinuierliche Zudosierung vorgesehen sein. Die kontinuierliche Zudosierung kann z.B. eine Druckregelung oder eine Proportionalsteuerung zugehöriger, regelbarer Zudosieröffnungen beinhalten. Eine diskontinuierliche Zudosierung läßt sich zur zeitliche Taktung steuerbarer Zudosieröffnungen mit veränderlicher Taktfrequenz und bei Bedarf mit zusätzlicher Druckregelung realisieren.

Es versteht sich, daß sich als Brennstoff vorliegend nicht nur Benzin, sondern auch andere Kohlenwasserstoffe oder Kohlenwasserstoffderivate eignen, die durch Reformierung und Oxidation in ein wasserstoffreiches Gas umgewandelt werden können, z.B. Methanol. Die erfindungsgemäße Reaktoranlage läßt sich sehr gut zur Bereitstellung von Wasserstoff für die Brennstoffzellen eines Brennstoffzellenfahrzeugs verwenden, da sie die spezifischen Bedingungen für eine solche mobile Anwendung gut erfüllt, wie ausreichende Lastspreizung und Dynamik, Temperaturbeständigkeit und lageunabhängige Funktionsfähigkeit. Letzteres erleichtert den Einbau im Kraftfahrzeug mit seinen meist beengten Bauraumverhältnissen.

Mit Hilfe des vorgeschalteten Eduktgemischaufbereitungsraums wird gewährleistet, daß die umzusetzenden Edukte sehr homogen vermischt in den Reaktionsraum gelangen. Systemwärme kann rückgekoppelt werden, ohne verloren zu gehen. Vorerwärmte Luft und/oder verdampftes Wasser ermöglichen schon im Eduktgemischaufbereitungsraum eine weitestgehend vollständige Vorverdampfung des eingespritzten Brennstoffs. Da das Eduktgemisch schon homogen in den Reaktionsraum eintritt, kann dort problemlos eine Katalysatorträgerstruktur eingesetzt werden, die nicht mehr wesentlich vermischend wirkt, wie z.B. eine monolithische Kanalstruktur. Es versteht sich, daß sich die erfindungsgemäße Reaktoranlage nicht nur für mobile, sondern auch für stationäre Systeme überall dort eignet, wo aus einem Kohlenwasserstoff oder Kohlenwasserstoffderivat ein wasserstoffreiches Gas gewonnen werden soll. Je nach Wunsch braucht die Prozeßführung nicht zwingend autotherm sein, sondern kann auch insgesamt endotherm oder exotherm eingestellt werden.

## Patentansprüche

1. Verfahren zur katalytischen Umsetzung eines Kohlenwasserstoff- oder Kohlenwasserstoffderivat-Brennstoffes mit zugeführtem Wasser und mit Sauerstoff in einem katalysatorbelegten Reaktionsraum, welchem ein Eduktgemisch mit dem Brennstoff als einem ersten Edukt, dem Wasser als einem zweiten Edukt und einem sauerstoffhaltigen Gas als einem dritten Edukt zugeführt wird, wobei das Eduktgemisch in einem austrittsseitig an die Eintrittsseite (1a) des Reaktionsraums (1) angrenzenden Eduktgemischaufbereitungsraum (2) aufbereitet wird, in welchen der Brennstoff in flüssiger Form tröpfchenbildend durch Brennstoffeinspritzmittel eingespritzt wird, in welchen das sauerstoffhaltige Gas unter Verwirbelung der Brennstofftröpfchen durch Gaszufuhrmittel eingespeist wird, und in welchen das Wasser während einer Kaltstartphase in zerstäubter Form und während des betriebswarmen Zustandes in verdampfter form durch Wasserzufuhrmittel eingebracht wird, wobei das Wasser während des betriebswarmen Zustandes durch Systemwärmerückkopplung verdampft wird.

2. Verfahren Nach Anspruch 1,
**dadurch gekennzeichnet,**
**dass** die Brennstoffeinspritzmittel sowie die Wasser- und Gaszufuhrmittel gemeinsam mehrere, an einer Eintrittsseite (2c) des Eduktaufbereitungsraums (2) verteilte Zufuhrdüsen beinhalten, durch welche jeweils eines oder mehrere der drei Edukte zudosiert wird bzw. werden.

3. Verfahren Nach Anspruch 1 oder 2,
**dadurch gekennzeichnet,**
**dass** die Gaszufuhrmittel Mittel beinhalten, durch welche eine Drallströmung erzeugt wird.

4. Verfahren nach Anspruch 1, 2 oder 3,
**dadurch gekennzeichnet,**
**dass** die Gaszufuhrmittel Mittel beinhalten, durch welche das sauerstoffhaltige Gas mittels Verdichtung und/oder Systemwärmerückkopplung vorgewärmt wird.

5. Verfahren nach einem der Ansprüche 1 bis 4,
**dadurch gekennzeichnet,**
**dass** der zerstäubte oder verdampfte Wasser dem sauerstoffhaltigen Gasstrom vor dem Eintritt desselben in den Eduktaufbereitungsraum (2) durch die Wasserzufuhrmittel zudosiert wird.

6. Verfahrens nach einem der Ansprüche 1 bis 5,
**dadurch gekennzeichnet,**
**dass** der Eduktgemischaufbereitungsraum einen Hauptraum (10) und eine diesem vorgeschaltete Vormischkammer (11) umfasst, in welche die drei Edukte zudosiert werden.

7. Verfahren nach einem der Ansprüche 1 und 3 bis 6
**dadurch gekennzeichnet,**
**dass** die Brennstoffeinspritzmittel, die Gaszufuhrmittel und die Wasserzufuhrmittel eine gemeinsame, einzelne Mehrstoffdüse (3) beinhalten, der die drei Edukte getrennt oder zwei der Edukte vorgemischt und das dritte Edukt davon getrennt zugeführt werden.

## Claims

1. Process for the catalytic conversion of a hydrocarbon or hydrocarbon derivative fuel with supplied water and with oxygen in a reaction space occupied with catalyst, to which a starting-material mixture comprising the fuel as a first starting material, the water as a second starting material and an oxygen-containing gas as a third starting material is fed, the starting-material mixture being prepared in a starting-material mixture preparation space (2), the outlet side of which adjoins the inlet side (1a) of the reaction space (1), into which the fuel is injected in liquid form, so as to form droplets, by fuel injection means, into which the oxygen-containing gas is fed by gas feed means so as to swirl up the droplets of fuel and into which the water is introduced, in atomized form during a cold-start phase and in evaporated form when the temperature has heated up to the operating temperature, by water feed means, the water being evaporated by feeding back system heat when the temperature has reached the operating temperature.

2. Process according to Claim 1, **characterized in that** the fuel injection means and the water and gas feed means together comprise a plurality of feed nozzles which are distributed over an inlet side (2c) of the starting-material preparation space (2) and through which in each case one or more of the three starting materials is/are metered in.

3. Process according to Claim 1 or 2, **characterized in that** the gas feed means comprise means which generate a swirling flow.

4. Process according to Claim 1, 2 or 3, **characterized in that** the gas feed means comprise means which preheat the oxygen-containing gas by compression and/or feedback of system heat.

5. Process according to one of Claims 1 to 4, **characterized in that** the atomized or evaporated water is metered to the oxygen-containing gas stream by the water feed means before the oxygen-containing gas stream enters the starting-material preparation space (2).

6. Process according to one of Claims 1 to 5, **characterized in that** the starting-material mixture preparation space comprises a main space (10) and a premixing chamber (11), which is connected upstream of the main space and into which the three starting materials are metered.

7. Process according to one of Claims 1 and 3 to 6, **characterized in that** the fuel injection means, the gas feed means and the water feed means comprise a common, single multi-fluid nozzle (3), to which the three starting materials are fed separately or to which two of the starting materials are fed in premixed form and the third starting material is fed separately.

## Revendications

1. Procédé de conversion catalytique d'un carburant d'hydrocarbure ou de dérivé d'hydrocarbure avec apport d'eau et d'oxygène dans un espace de réaction recouvert de catalyseur, auquel on amène un mélange de réactifs qui comprend le carburant comme premier réactif, l'eau comme deuxième réactif et un gaz qui comprend de l'oxygène comme troisième réactif, le mélange de réactifs étant préparé dans un espace (2) de préparation de mélange de réactifs dont la sortie est contiguë au côté (1a) d'entrée de l'espace de réaction (1) et dans lequel le carburant est injecté à l'état liquide sous forme de gouttelettes formées par un moyen d'injection de carburant, le gaz qui contient de l'oxygène étant amené par l'intermédiaire de moyens d'amenée de gaz avec tourbillonnement des gouttelettes de carburant et l'eau étant amenée sous forme pulvérisée au cours d'une phase de démarrage à froid et sous forme de vapeur lors du fonctionnement à chaud, l'eau étant vaporisée par récupération de la chaleur du système lors du fonctionnement à chaud.

2. Procédé selon la revendication 1, **caractérisé en ce que** les moyens d'injection de carburant ainsi que les moyens d'amenée d'eau et les moyens d'amenée de gaz comprennent sur un côté d'entrée (2c) de l'espace (2) de préparation de réactifs plusieurs ajutages d'amenée communs répartis par chacun desquels un ou plusieurs des trois réactifs peuvent être amenés.

3. Procédé selon les revendications 1 ou 2, **caractérisé en ce que** les moyens d'amenée de gaz comprennent des moyens qui créent un écoulement en tourbillon.

4. Procédé selon la revendication 1, 2 ou 3, **caractérisé en ce que** les moyens d'amenée de gaz comprennent des moyens qui préchauffent le gaz qui contient de l'oxygène par compression et/ou par récupération de la chaleur du système.

5. Procédé selon l'une quelconque des revendications 1 à 4, **caractérisé en ce qu'**avant l'entrée du gaz qui contient de l'oxygène dans l'espace (2) de préparation de réactifs, l'eau pulvérisée ou vaporisée est amenée dans l'écoulement du gaz qui contient de l'oxygène par des moyens d'amenée d'eau.

6. Procédé selon l'une quelconque des revendications 1 à 5, **caractérisé en ce que** l'espace de préparation de mélange de réactifs comprend un espace principal (10) et une chambre de prémélange (11) agencée en amont de celui-ci et dans laquelle les trois réactifs sont amenés.

7. Procédé selon l'une quelques des revendications 1 et 3 à 6, **caractérisé en ce que** les moyens d'injection de carburant, les moyens d'amenée de gaz et les moyens d'amenée d'eau comprennent un unique ajutage multisubstances (3) commun auquel les trois réactifs sont amenés séparément ou deux des réactifs sont amenés prémélangés et le troisième réactif séparé de ceux-ci.
